# EUROPEAN PATENT APPLICATION

(11) **EP 3 401 083 A1**
(43) Date of publication of application: **14.11.2018**
(21) Application number: 18167580.2
(22) Date of filing: 16.04.2018
(51) Int. Cl.: B29C 64/277, B29C 64/282, B33Y 40/00, B29C 64/153, B22F 3/105

(54) **ENERGY SOURCE FOR ADDITIVE MANUFACTURE**

(30) Priority: 12.05.2017 GB 201707616
(71) Applicant: Rolls-Royce plc, London SW1E 6AT (GB)
(72) Inventor: Garry, Ian M, Derby, Derbyshire DE24 8BJ (GB); Grafton-Reed, Clive, Derby, Derbyshire DE24 8BJ (GB)
(74) Representative: Rolls-Royce plc

(57) **Abstract**

An energy source for an additive manufacturing arrangement comprises a workpiece and a powder delivery device. The energy source comprises a plurality of discrete energy sources. The plurality of discrete energy sources may be coordinated in use to deliver energy simultaneously to a plurality of regions of the workpiece in a matrix form.

## Description

The present disclosure concerns additive manufacturing techniques, and in particular heat sources suitable for such techniques.

Additive Layer Manufacture (ALM) is a rapidly developing technology across industry. In aerospace, for example in the manufacture of gas turbine engines, this technology can offer significant performance and weight advantages over conventional methods of manufacture.

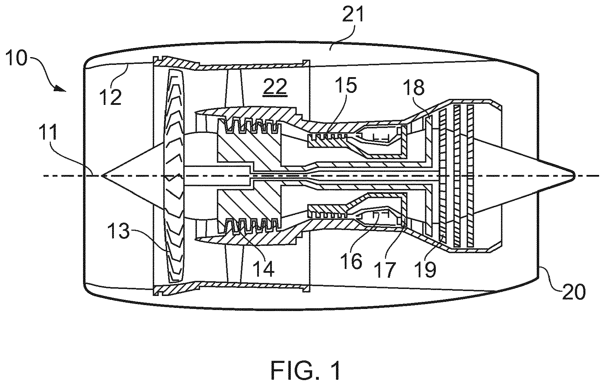

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

There are a number of components within a gas turbine engine that may advantageously be formed by an ALM technique. Some examples (with the advantage arising out of the ALM manufacture for each component shown in parentheses) are: fuel spray nozzles (reduced part count); combustion tiles (novel cooling geometries); support brackets (reduced weight with organic form); swirlers (optimised geometry); and nozzle guide vanes (optimised cooling). This list, of course, is not exhaustive.

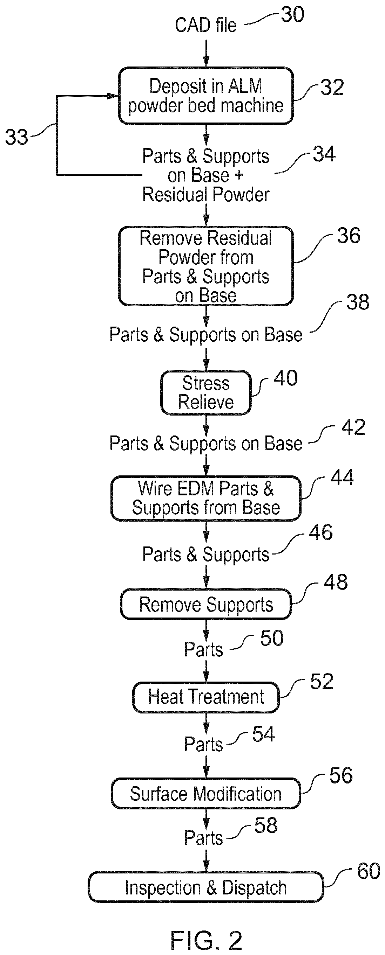

Figure 2 is a flow diagram showing a known process for the manufacture of a metallic component using a Powder Bed additive layer process.

The definition of the component to be manufactured is contained in a CAD file 30, which is uploaded to the ALM apparatus. The definition may include supports, which are not part of the final component but are needed to provide support during the manufacturing process.

A first layer of metallic powder is deposited on a baseplate or base (step 32) and selectively melted or sintered in the positions dictated by the component definition. This produces the first layer or 'slice' of the component (and any supports) surrounded by surplus or residual powder 34. Step 32 is then repeated (33) as many times as necessary to build up the entire component layer-by-layer on the base.

The residual powder is then removed from the component (step 36) leaving the component (and any supports) 38 still attached to the base. Heat treatment (step 40) is used to relieve any residual stresses in the component 42, following which the component is removed from the base (step 44), and any supports removed from the component 46 (step 48) by electron discharge machining (EDM) or any other suitable method, to leave the component 50 standing alone.

A further heat treatment (step 52) may be applied, followed by any required surface modification of the component 54 (e.g. machining or polishing) to meet dimensional or surface finish requirements (step 56). The finished component 58 is then inspected before despatch (step 60).

Known ALM processes, as described above, are slow and expensive and require the precision control of a number of significant elements, for example laser galvanometers and powder distribution. The precision of the component is dictated by the stability of the galvanometer and the machine structure and configuration.

During the ALM build process residual stresses are built up within the laser sintered material. In some metal alloys these stresses can lead to the formation of cracks; this is a particular problem with high-temperature-capable alloys which tend to be less tolerant of fast cooling rates. Such cracks can form either during the build process or during subsequent heat treatment operations and are extremely difficult to avoid.

It may be possible to reduce cracking by a subsequent secondary process such as hot isostatic pressing (HIP) but this inevitably increases the time and cost of the process. This cracking restricts the range of materials that can be processed using ALM techniques.

It would therefore be desirable to improve ALM techniques, to avoid or minimise residual stresses and consequent cracking in components, and thereby to permit the quicker and cheaper manufacture of components using these techniques and to permit the use of ALM techniques with a wider range of alloys and components.

According to a first aspect there is provided an energy source for an additive manufacturing arrangement as set out in the claims.

Embodiments will now be described by way of example only, with reference to the Figures, in which:
**Figure 1** is a sectional side view of a gas turbine engine, as already described; and
**Figure 2** is a flow diagram showing a known process for the manufacture of components using a Powder Bed additive layer process, as already described.

A matrix of energy sources, photonic or electromagnetic, can be configured into an array so as to illuminate the powder bed with fine definition for the manufacture of ALM powder bed components. The energy sources are aimed and focused so as to illuminate the powder bed with a matrix pattern. The energy sources can be individually controlled.

This allows the illumination of different areas of the powder bed to be finely controlled, for example so that different power levels may be supplied to different regions of the powder bed. In other words, the intensity profile at the interaction zone (the region of the powder bed where the energy is interacting with the powder) can be varied across the area of the beam.

Individual elements of the matrix are controlled temporally for their brightness and powder density, to allow a controlled generation of the desired component form. This system will allow for designer use of modulated, continuous wave, and pulsed energy output. This method also avoids the need for a beam or multiple beams of energy to be scanned in order to produce the desired form.

By varying the energy delivered by each individual energy source, by position or with time, energy input to the powder bed can be tailored to the powder thickness/density and the required component form. If required, only a part of the whole matrix area (which may be referred to as a zone) can be illuminated. Because there is no need for the energy source to move or scan over the powder bed, and therefore no need for these mechanisms, there is a reduction in the cost and complexity of the apparatus.

The sequence of illumination can be controlled so as to follow a desired sequence/pattern which can be used for melt and heat management, and for synchronisation with the material deposition system. It may also illuminate the working area completely so that the complete desired pattern is generated at the same time rather than by a scanning technique which contributes to the build-up of residual stress.

The matrix of energy sources may emit a number of wavelengths and or pulse durations (if pulsed or modulated) simultaneously or sequentially so that the conversion of material is optimised. For example, a range of wavelengths may be used depending on the emitting source and the material to be processed. It is envisaged that the advantages of the invention could be realised with wavelengths in the range from 500nm to 10µm, and particularly in the range from 600-800nm to 2µm.

The use of a matrix energy source allows for variation of the energy density in a non-uniform manner with time. This allows cooling rates to be more precisely controlled than in known arrangements, and for the cooling rates to be tailored to the geometry and material being processed.
An additional optical element may be added to the system to overlay a fine motion to the pattern which could be used to agitate the melt to ensure a complete blend of material. This additional optical element may be, for example, an additional beam scanned over the powder bed at an oblique angle; an adaptive optical element to focus the energy from the matrix in a different manner; or a microelectromechanical device to scan 'beamlets' over the surface.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An energy source for an additive manufacturing arrangement, the additive manufacturing arrangement comprising a workpiece and a powder delivery device, the energy source **characterised in that** it comprises a plurality of discrete energy sources.

2. The energy source of claim 1, in which the plurality of discrete energy sources can be coordinated in use to deliver energy simultaneously to a plurality of regions of the workpiece in a matrix form.

3. The energy source of claim 2, in which the intensity of the discrete energy sources can be individually controlled to deliver energy at different rates to different regions.

4. The energy source of any one of the preceding claims, in which the intensity of the discrete energy sources can be varied with time.

5. The energy source of any one of the preceding claims, in which the intensity profile at the interaction zone can be varied across the area of the beam.

6. The energy source of any one of the preceding claims, in which the plurality of discrete energy sources can deliver energy at different wavelengths from one another.

7. The energy source of any one of the preceding claims, in which the discrete energy sources can deliver energy in separate time-limited pulses.

8. The energy source of any one of the preceding claims, further comprising an element interposed between the discrete energy sources and the workpiece, the element configured to impart a periodic variation in the energy delivered to the workpiece.
